# EUROPEAN PATENT SPECIFICATION

(11) **EP 2 050 559 B1**
(45) Date of publication and mention of the grant of the patent: **12.03.2014**
(21) Application number: 06778477.7
(22) Date of filing: 31.07.2006
(51) Int. Cl.: B29C 70/38, B32B 37/00, B29C 35/08, B29K 63/00

(54) **TOOL AND METHOD FOR PRODUCING PIECES OF COMPOUND MATERIALS OUTSIDE AN AUTOCLAVE**
WERKZEUG UND VERFAHREN ZUR HERSTELLUNG VON TEILEN AUS VERBUNDMATERIALIEN AUSSERHALB EINER AUTOKLAVE
OUTIL ET PROCÉDÉ DE FABRICATION DE PIÈCES EN MATIÈRE COMPOSITE HORS AUTOCLAVE

(43) Date of publication of application: 22.04.2009
(73) Proprietor: Airbus Operations S.L., 28906 Madrid (ES)
(72) Inventor: BUTRAGUEÑO MARTINEZ, ASUNCIÓN, 28906 Madrid (ES); SÁNCHEZ GÓMEZ, JOSÉ, 28906 Getafe Madrid (ES); AVILA DOMINGUEZ, Rafael, 28906 Madrid (ES)
(74) Representative: Elzaburu Marquez, Alberto
(86) International application number: PCT/ES2006/070124
(87) International publication number: WO 2008/015301

(56) References cited:
- EP-A1- 0 534 092
- ES-A1- 8 200 590
- US-A- 3 574 040
- US-A- 3 574 040
- US-A- 4 186 044
- US-A- 4 475 976
- US-B1- 6 451 152
- US-B1- 6 478 926
- A. C. LIND, L.N. MEDGYESI-MITSCHANG, J.E. KURZ, H.F. MCKINNEY, F.C. WEAR: "Microwave heating for manufacturing carbon-fiber thermoplastics", MRS PROCEEDINGS, vol. 189, 1 January 1990 (1990-01-01), pages 461-467, XP002691295, DOI: 10.1557/PROC-189-461

## Description

### FIELD OF THE INVENTION

This invention relates to a tool and a process for manufacturing pieces of composite materials, and more particularly for a tool and process for manufacturing outside an autoclave the results of which are comparable to processes including a curing step in an autoclave.

### BACKGROUND OF THE INVENTION

Composite materials are increasingly more appealing for a wide variety of uses in various industries such as the aeronautical industry, the naval industry, the automobile industry or the sports industry due to its high resistance and resistance-weight ratio.

The composite materials most widely used in said industries consist of fibers or fiber bundles embedded in a thermosetting or thermoplastic resin in the form of preimpregnated material or "prepreg".

A composite material is formed by a plurality of preimpregnated material layers. Each layer of preimpregnated material is formed by fibers or fiber bundles that can be crosslinked forming different fabric styles or can be facing a single direction forming unidirectional tapes. These fibers or fiber bundles are impregnated with resins (either thermosetting or thermoplastic resins) which in many cases are partially polymerized.

Currently, and mainly in the aerospace industry, composite materials of an organic and continuous fiber matrix based mainly on epoxy resins and carbon fibers are used massively.

The use of this type of pieces has been increasing, particularly in the aeronautical field, until reaching the current situation in which composite materials of an epoxy and carbon fiber matrix can be considered the option most widely used in a wide variety of structural elements. This situation has fomented and continues to foment the development of manufacturing processes capable of producing elements with the required quality in a repeated manner and with a suitable manufacturing cost.

Regarding the arrangement of layers of preimpregnated material for the "construction" of pieces of composite material, there are several methods according to the means which are available for their positioning and particularly manual stacking and automatic stacking.

In manual stacking, an operator places the different layers of preimpregnated material with the required orientation and size.

In automatic stacking, a robotic system is responsible for placing the different layers of preimpregnated material with the required orientation and position and cutting them at a specific length.

In automatic stacking there are two fundamental types according to the preimpregnated material used and its width upon stacking it:
- ATL (automatic lay-up): the robotic system positions the preimpregnated material in the form of more or less wide strips to cover planar surfaces or surfaces with a single curve.
- FP (fiber placement): the robotic system positions very narrow groups of strips to cover surfaces with a double curve.

The process for manufacturing composite materials from this plurality of layers (laminate) generally requires compaction to obtain the desired fiber volume and eliminate cavities and trapped air from the composite and a curing process with which the cross-linking of the polymer chains of the resin impregnating the fibers is obtained.

These pieces have traditionally been manufactured by means of the application of pressure and a vacuum (as a compaction means) and the application of heat (as a means of obtaining the cross-linking of the polymer chains), particularly in an autoclave inside of which a controlled atmosphere is created.

The time invested in manufacturing the piece from the preimpregnated material is the sum of the time invested in each of the necessary processes: stacking the successive layers of preimpregnated material forming the piece, application of a vacuum (as one of the compaction means) and curing the piece inside an autoclave under the action of pressure (compaction) and heat (cross-linking of polymer chains). The total time is generally elevated and the greater the complexity and number of layers of the stacking the more elevated the total time.

It is known document EP0534092 disclosing a process for manufacturing fiber laminations that are advanced to substantial cure in situ while resin impregnated fiber (in the form of individual tows, a band thereof, or a tape) is being placed on a workpiece on the mandrel by preheating the fiber for partially advancing the cure of the resin in the fiber, shaping the fiber to the desired shape, and laying up the partially advanced fiber on the workpiece on the mandrel while simultaneously nip point heating the fiber in an area proximate to the point where the fiber is being placed on the workpiece.

It is also known document A.C. Lind, et all of title "Microwave heating for manufacturing carbon-fiber thermoplastics" disclosing an automated tape placement process of composite layers. For rapidly heating carbon-fiber composites the process discloses a microwave applicator.

It is also known document US3574040 disclosing an apparatus for making laminated structural shapes by the controlled detrusive placement and polymerization of tectonic filamentous tapes. The apparatus disclosed comprises a movable table for stacking the tapes and the utilization of ultrasonic energy for applying pressure to said laminates.

Another aspect to be considered is the high cost of manufacturing pieces of composite materials, and particularly the high cost of the energy required by the autoclave.

Therefore industry constantly demands new methods allowing the reduction of both the time and energy necessary for manufacturing pieces of composite materials.

This invention is aimed at meeting this demand.

### SUMMARY OF THE INVENTION

In a first aspect, the invention provides a tool for manufacturing pieces of composite material outside the autoclave according to claim 1.

In a second embodiment the invention provides a process for manufacturing pieces of composite material outside an autoclave according to claim 7.

In a third aspect, the invention provides a process for manufacturing pieces of composite material outside an autoclave according to claim 8.

For the purpose of this invention composite material is understood to be any material of an organic matrix (epoxy, bismaleimide, polyimide, phenol, vinyl ester,...) and continuous reinforcement fibers (carbon, ceramic, glass, organic, polyaramide, PBO...) .

Other features and advantages of this invention will be understood from the following detailed description of an illustrative embodiment of its object in relation to the attached drawings.

### DESCRIPTION OF THE DRAWINGS

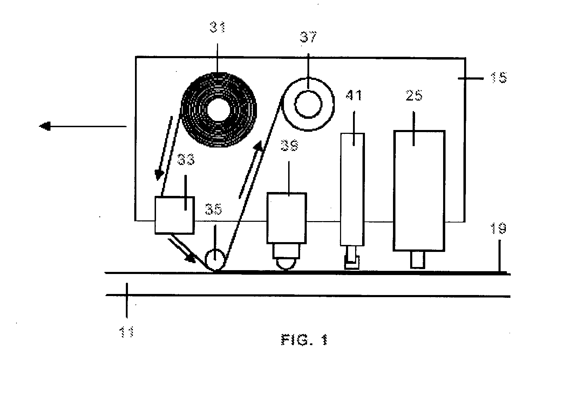

Figure 1 shows a schematic view of the head of the tool object of this invention.

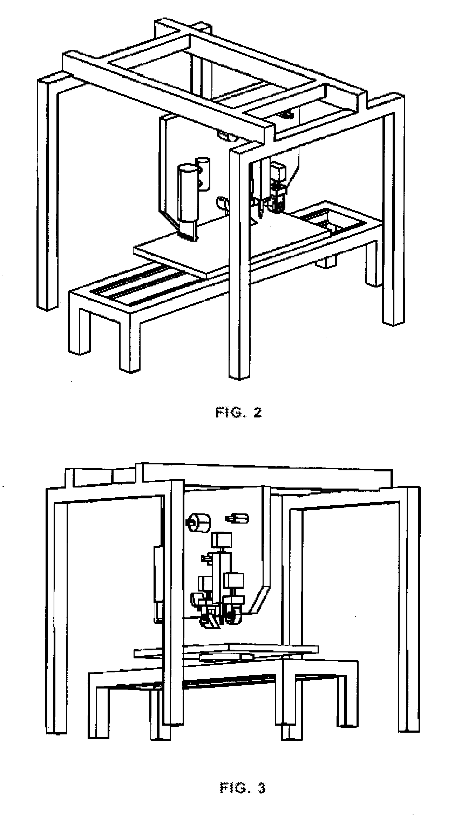

Figures 2 and 3 show schematic perspective views of the tool object of this invention.

### DETAILED DESCRIPTION OF THE INVENTION

In the preferred embodiment shown in the Figures, the tool 9 object of this invention comprises a stacking table 11 with an upper surface 13 including an area with the shape of the piece to be manufactured and a head 15 supported on a gantry 17. The table 11 includes means allowing the upper surface 13 to move along said table and rotate about an axis located in its central part and the gantry 17 includes means so that the head 15 can move along the width of the table 11.

Head 15 incorporates:
- Automatic means for placing tapes 19 of composite material in the form of prepreg including a reel of preimpregnated material 31, a guided blade unit 33, a heated compacting roller 35 and a reel of separating paper 37.
- Compacting means for compacting the layers of prepreg, including a heated and/or cooled compacting roller 39 and an ultrasonic compacting unit 41.
- Microwave emission means 25.

The tool 9 is structured such that on one hand the head 15 can be located at different heights over the table 11 and on the other hand can activate all or part of the mentioned means. Therefore, for example the tool 9 can be configured so that the automatic means for placing tapes 19, the compacting means and the microwave emission means 25 are activated, which will usually occur during the stacking of the piece, or the tool can be configured so that only the microwave emission means 25 are activated, which will occur when individual operations for curing the piece are desired.

The tool 9 however is structured such that the arrangement of the mentioned means can be changed so that they can act in a different order.

In this sense one possible arrangement would be one in which the order of action is as follows: first the automatic means for placing tape, secondly the compacting means, and thirdly the microwave emission means 25. In this case the microwave emission means cure the layer that is in the course of being stacked.

In an alternative arrangement the order of action would be as follows: first the microwave emission means 25, secondly the automatic means for placing tape, and thirdly the compacting means. In this case the microwave emission means cure the layer located under the layer that is in the course of being stacked.

The features of the different components of the tool 9 and particularly the power required of the microwave emitter 25 will vary according to the features of the piece to be manufactured, and very particularly on its thickness. Therefore the microwave emitter 25 must be flexible enough so as to work at different powers so as to be able to vary the power emitted throughout the material curing process.

According to the invention, some features of the tool 9 are indicated below:
- Maximum stacking speed (maximum speed at which the head 15 can be moved): 70 m/min.
- Power of the microwave emitter 25 comprised between 0.1 kW and 10 kW.
- Frequency of the ultrasonic compacting unit 41 comprised between 20 kHz and 40 kHz.

A significant advantage of this invention is that the tool 9 can have a single control panel for the different means previously mentioned, simplifying their handling and control.

Described below is the process object of this invention which has the purpose of using different techniques together for manufacturing a piece of composite material "outside an autoclave", and particularly the following techniques:
- FP or ATL for stacking the composite material.
- Ultrasounds for obtaining suitable compacting between the different layers of composite material.
- Microwaves for obtaining the cross-linking of the polymer chains of the composite material.

In a first embodiment, the process object of this invention is carried out as follows:

Manufacturing the piece begins with the placement of the first layer of material. In this operation, using for example the tool 9 previously described, the prepreg located on the reel 31 passes through a blade system 33 towards the compacting roller 35, which positions it above the upper surface 13 of the stacking table 11. The separating paper accompanying the prepreg is wound on reel 37. Then the compacting roller 39 and the ultrasonic unit 41 carry out compacting operations on the prepreg tape 19 placed on the stacking table 11. Then the material is cured to a certain degree using the microwave emitter 25. This operation is carried out by suitably moving the head 15 of the tool 9 until all the material corresponding to a layer of the piece is placed, compacted and partially cured.

This layer cannot be completely cured because it has to have a certain degree of stickiness so that the next layer can be suitably placed on it.

The next layer will be placed in a similar manner to the first one (ATL or FP, compacting roller, US), and the action of the microwave emitter 25 will cause the partial curing of the second layer and also of the first.

The placement of different layers will therefore bring about successive curing cycles of the previous layers until reaching the required degree of curing. Finally to obtain suitable curing of the last layer after it is placed, it is necessary to carry out a specific curing cycle by means of the action of the microwave emitter 25.

In an embodiment of the process 80 mm wide prepreg tape has been stacked with an ATL head at a speed of 2 m/min, the frequency of the compacting unit is 20 kHz and the power of the microwave emitter is 0.1 kW.

In a second embodiment of the process object of this invention the curing of the different layers would be carried out once the stacking is complete.

Therefore if the tool 9 is used the different layers forming the piece are stacked in the same manner as previously described and are compacted one by one with the heating roller 39 and the ultrasonic compacting unit 41.

Once all the layers of composite material with the suitable size and orientation are stacked, they are cured using the microwave emitter 25, carrying out the necessary passes with the head 15 until the desired polymerization of the polymer chains is obtained.

## Claims

1. - A tool (9) for manufacturing pieces of composite material outside and autoclave, comprising:
a) A stacking table (11) having a movable upper surface (13) with the shape of the piece to be manufactured;
b) A movable head (15) on said stacking table (11) provided with the following means:
b1) Automatic means for placing tapes (19) or rovings of composite material in the form of prepreg;
b2) Compacting means for compacting the composite material wherein said compacting means include a roller (39) and an ultrasonic compacting unit (41) and the maximum stacking speed is 70 m/min and the frequency of the ultrasonic compacting unit (41) is comprised between 20 kHz and 40 kHz;
b3) Microwave emission means (25) for curing the composite material wherein the power of the microwave emitter (25) is comprised between 0.1 kW and 10 kW.

2. - A tool (9) for manufacturing pieces of composite material outside an autoclave according to claim 1, **characterized in that** it is structured such that the movements of the head (15) and the upper surface (13) of the stacking table (11) allow the stacking of the desired piece.

3. - A tool (9) for manufacturing pieces of composite material outside an autoclave according to claim 2, **characterized in that** it is structured such that the upper surface (13) can rotate about an axis located in the center thereof and move along the stacking table (11), and the head can move along the entire width of the stacking table (11).

4. - A tool (9) for manufacturing pieces of composite material outside an autoclave according to claims 1-3, **characterized in that** the head is structured such that it can be configured with any operational state of the mentioned means.

5. - A tool (9) for manufacturing pieces of composite material outside an autoclave according to claims 1-4, **characterized in that** the head is structured such that the order of action of the mentioned means can be modified.

6. - A tool (9) for manufacturing pieces of composite material outside an autoclave according to claims 1-5, **characterized in that** the head is structured such that the distance between the mentioned means can be modified.

7. - A process for manufacturing pieces of composite material outside an autoclave, comprising the following steps:
a) Placing the composite material in the form of tapes or rovings of prepreg on a tool with the shape of the piece to be manufactured, compacting it and partially curing it after its placement until completing a layer of the piece wherein a compacting roller (39) and an ultrasonic unit (41) carry out the compacting operations and a microwave emitter (25) carries out the partially curing by means of the local application of heat after the placement of the composite material;
b) Repeating step a) until completing the stacking of the piece;
c) Curing the last layer of the piece to the required degree of curing
wherein the maximum stacking speed is 70 m/min, the power of the microwave emitter (25) is comprised between 0.1 kW and 10 kW and the frequency of the ultrasonic compacting unit (41) is comprised between 20 kHz and 40 kHz.

8. - A process for manufacturing pieces of composite material outside an autoclave, comprising the following steps:
a) Placing the composite material in the form of tapes or rovings of prepreg on a tool with the shape of the piece, compacting it after its placement until completing a layer of the piece wherein a compacting roller (39) and a ultrasonic unit (41) carry out the compacting operations;
b) Repeating step a) until completing the stacking of the piece;
c) Curing the piece by means of the local application of heat on its surface with a microwave emitter;
wherein the maximum stacking speed is 70 m/min, the power of the microwave emitter (25) is comprised between 0.1 kW and 10 kW and the frequency of the ultrasonic compacting unit (41) is comprised between 20 kHz and 40 kHz.

9. - A process for manufacturing pieces of composite material outside an autoclave, according to claim 7 **characterized in that** for 80 mm wide prepreg the stacking speed is of 2m/min, the frequency of the compacting unit is of 20 KHz and the power of the microwave is of 0.1 kW.

## Patentansprüche

1. Werkzeug (9) zum Herstellen von Teilen aus Verbundmaterial außerhalb eines Autoklaven, mit:
a) einem Stapelungstisch (11) mit einer beweglichen oberen Fläche (13) in der Form des herzustellenden Teils; und
b) einem auf dem Stapelungstisch (11) angeordneten beweglichen Kopf (15) mit folgenden Einrichtungen:
b1) einer automatischen Einrichtung zum Platzieren von Streifen (19) oder Faserbündeln aus einem Verbundmaterial in der Form eines Prepreg;
b2) einer Verdichtungseinrichtung zum Verdichten des Verbundmaterials, wobei die Verdichtungseinrichtung eine Rolle (39) und eine Ultraschallverdichtungseinheit (41) aufweist, und wobei die maximale Stapelungsgeschwindigkeit 70 m/min beträgt und die Frequenz der Ultraschallverdichtungseinheit (41) zwischen 20 kHz und 40 kHz liegt; und
b3) einer Mikrowellenemissionseinrichtung (25) zum Aushärten des Verbundmaterials, wobei die Leistung der Mikrowellenemissionseinrichtung (25) im Bereich zwischen 0,1 kW und 10 kW liegt.

2. Werkzeug (9) zum Herstellen von Teilen aus Verbundmaterial außerhalb eines Autoklaven nach Anspruch 1, **dadurch gekennzeichnet, dass** das Werkzeug derart strukturiert ist, dass die Bewegungen des Kopfes (15) und der oberen Fläche (13) des Stapelungstischs (11) die Stapelung des gewünschten Teils ermöglichen.

3. Werkzeug (9) zum Herstellen von Teilen aus Verbundmaterial außerhalb eines Autoklaven nach Anspruch 2, **dadurch gekennzeichnet, dass** das Werkzeug derart strukturiert ist, dass die obere Fläche (13) um eine in ihrer Mitte angeordnete Achse drehbar und entlang des Stapelungstischs (11) bewegbar ist und der Kopf sich entlang der gesamten Breite des Stapelungstischs (11) bewegen kann.

4. Werkzeug (9) zum Herstellen von Teilen aus Verbundmaterial außerhalb eines Autoklaven nach einem der Ansprüche 1 bis 3, **dadurch gekennzeichnet, dass** der Kopf derart strukturiert ist, dass er mit einem beliebigen betrieblichen Zustand der erwähnten Einrichtungen konfiguriert werden kann.

5. Werkzeug (9) zum Herstellen von Teilen aus Verbundmaterial außerhalb eines Autoklaven nach einem der Ansprüche 1 bis 4, **dadurch gekennzeichnet, dass** der Kopf derart strukturiert ist, dass die Folge der Operationen der vorstehend erwähnten Einrichtungen modifiziert werden kann.

6. Werkzeug (9) zum Herstellen von Teilen aus Verbundmaterial außerhalb eines Autoklaven nach einem der Ansprüche 1 bis 5, **dadurch gekennzeichnet, dass** der Kopf derart strukturiert ist, dass der Abstand zwischen den erwähnten Einrichtungen modifiziert werden kann.

7. Verfahren zum Herstellen von Teilen aus Verbundmaterial außerhalb eines Autoklaven, mit den folgenden Schritten:
a) Platzieren des Verbundmaterials in Form von Streifen oder in Rovingform aus Prepreg auf einem Werkzeug mit der Form des herzustellenden Teils, Verdichten des Verbundmaterials und teilweises Aushärten des Verbundmaterials, nachdem es platziert wurde, bis eine Lage des Teils fertiggestellt ist, wobei eine Verdichtungsrolle (39) und eine Ultraschalleinheit (41) die Verdichtungsoperationen ausführen und eine Mikrowellenemissionseinrichtung (25) die Teilaushärtung durch lokale Anwendung von Wärme nach dem Platzieren des Verbundmaterials ausführt;
b) Wiederholen von Schritt a) bis zum Abschluss der Stapelung des Teils; und
c) Aushärten der letzten Lage des Teils bis zum erforderlichen Aushärtungsgrad,
wobei die maximale Stapelungsgeschwindigkeit 70 m/min beträgt, die Leistung der Mikrowellenemissionseinrichtung (25) zwischen 0,1 kW und 10 kW und die Frequenz der Ultraschallverdichtungseinheit (41) im Bereich zwischen 20 kHz und 40 kHz liegt.

8. Verfahren zum Herstellen von Teilen aus Verbundmaterial außerhalb eines Autoklaven, mit den folgenden Schritten:
a) Platzieren des Verbundmaterials in Form von Streifen oder in Rovingform aus Prepreg auf einem Werkzeug mit der Form des herzustellenden Teils, Verdichten des Verbundmaterials nach der Platzierung, bis eine Lage des Teils fertiggestellt ist, wobei eine Verdichtungsrolle (39) und eine Ultraschalleinheit (41) die Verdichtungsoperationen ausführen;
b) Wiederholen von Schritt a) bis zum Abschluss der Stapelung des Teils; und
c) Aushärten des Teils durch lokale Anwendung von Wärme auf seine Oberfläche durch eine Mikrowellenemissionseinrichtung;
wobei die maximale Stapelungsgeschwindigkeit 70 m/min beträgt, die Leistung der Mikrowellenemissionseinrichtung (25) zwischen 0,1 kW und 10 kW und die Frequenz der Ultraschallverdichtungseinheit (41) im Bereich zwischen 20 kHz und 40 kHz liegt.

9. Verfahren zum Herstellen von Teilen aus Verbundmaterial außerhalb eines Autoklaven nach Anspruch 7, **dadurch gekennzeichnet, dass** die Stapelungsgeschwindigkeit für ein 80 mm breites Prepreg 2 m/min, die Frequenz der Verdichtungseinheit 20 kHz und die Mikrowellenleistung 0,1 kW betragen.

## Revendications

1. Outil (9) pour fabriquer des pièces de matériau composite à l'extérieur d'un autoclave, comprenant :
a) une table d'empilement (11) comportant une surface supérieure mobile (13) avec la forme de la pièce devant être fabriquée ;
b) une tête mobile (15) sur ladite table d'empilement (11), munie des moyens suivants :
b1) des moyens automatiques pour disposer des bandes (19) ou des mèches de matériau composite sous la forme de préimprégné ;
b2) des moyens de compactage pour compacter le matériau composite, lesdits moyens de compactage comprenant un rouleau (39) et une unité de compactage à ultrasons (41), et la vitesse d'empilement maximale étant de 70 m/min et la fréquence de l'unité de compactage à ultrasons (41) étant comprise entre 20 kHz et 40 kHz ;
b3) des moyens d'émission de micro-ondes (25) pour durcir le matériau composite, la puissance de l'émetteur de micro-ondes (25) étant comprise entre 0,1 kW et 10 kW.

2. Outil (9) pour fabriquer des pièces de matériau composite à l'extérieur d'un autoclave selon la revendication 1, **caractérisé en ce qu'**il est structuré de telle sorte que les mouvements de la tête (15) et de la surface supérieure (13) de la table d'empilement (11) permettent l'empilement de la pièce désirée.

3. Outil (9) pour fabriquer des pièces de matériau composite à l'extérieur d'un autoclave selon la revendication 2, **caractérisé en ce qu'**il est structuré de telle sorte que la surface supérieure (13) puisse tourner autour d'un axe situé dans le centre de celle-ci et se déplacer le long de la table d'empilement (11), et que la tête puisse se déplacer le long de la totalité de la largeur de la table d'empilement (11).

4. Outil (9) pour fabriquer des pièces de matériau composite à l'extérieur d'un autoclave selon les revendications 1 à 3, **caractérisé en ce que** la tête est structurée de telle sorte qu'elle puisse être configurée avec n'importe quel état de fonctionnement des moyens mentionnés.

5. Outil (9) pour fabriquer des pièces de matériau composite à l'extérieur d'un autoclave selon les revendications 1 à 4, **caractérisé en ce que** la tête est structurée de telle sorte que l'ordre d'action des moyens mentionnés puisse être modifié.

6. Outil (9) pour fabriquer des pièces de matériau composite à l'extérieur d'un autoclave selon les revendications 1 à 5, **caractérisé en ce que** la tête est structurée de telle sorte que la distance entre les moyens mentionnés puisse être modifiée.

7. Procédé pour fabriquer des pièces de matériau composite à l'extérieur d'un autoclave, comprenant les étapes suivantes :
a) la disposition du matériau composite sous la forme de bandes ou de mèches de préimprégné sur un outil avec la forme de la pièce devant être fabriquée, le compactage de celui-ci et le durcissement partiel de celui-ci après sa disposition jusqu'à l'achèvement d'une couche de la pièce, un rouleau de compactage (39) et une unité à ultrasons (41) effectuant les opérations de compactage, et un émetteur de micro-ondes (25) effectuant le durcissement partiel à l'aide de l'application locale de chaleur après la disposition du matériau composite ;
b) la répétition de l'étape a) jusqu'à l'achèvement de l'empilement de la pièce ;
c) le durcissement de la dernière couche de la pièce au degré de durcissement requis,
dans lequel la vitesse d'empilement maximale est de 70 m/min, la puissance de l'émetteur de micro-ondes (25) est comprise entre 0,1 kW et 10 kW, et la fréquence de l'unité de compactage à ultrasons (41) est comprise entre 20 kHz et 40 kHz.

8. Procédé pour fabriquer des pièces de matériau composite à l'extérieur d'un autoclave, comprenant les étapes suivantes :
a) la disposition du matériau composite sous la forme de bandes ou de mèches de préimprégné sur un outil avec la forme de la pièce, le compactage de celui-ci après sa disposition jusqu'à l'achèvement d'une couche de la pièce, un rouleau de compactage (39) et une unité à ultrasons (41) effectuant les opérations de compactage ;
b) la répétition de l'étape a) jusqu'à l'achèvement de l'empilement de la pièce ;
c) le durcissement de la pièce par application locale de chaleur sur sa surface avec un émetteur de micro-ondes ;
dans lequel la vitesse d'empilement maximale est de 70 m/min, la puissance de l'émetteur de micro-ondes (25) est comprise entre 0,1 kW et 10 kW, et la fréquence de l'unité de compactage à ultrasons (41) est comprise entre 20 kHz et 40 kHz.

9. Procédé pour fabriquer des pièces de matériau composite à l'extérieur d'un autoclave selon la revendication 7, **caractérisé en ce que**, pour un préimprégné de 80 mm de large, la vitesse d'empilement est de 2 mm/m, la fréquence de l'unité de compactage est de 20 kHz et la puissance des micro-ondes est de 0,1 kW.
